# EUROPEAN PATENT APPLICATION

(11) **EP 3 483 419 A1**
(43) Date of publication of application: **15.05.2019**
(21) Application number: 17824287.1
(22) Date of filing: 05.07.2017
(51) Int. Cl.: F02M 21/02, B63B 25/16, B63H 21/14, B63H 21/38, F02B 43/00, F02M 37/00, F17C 13/00

(54) **SHIP**

(30) Priority: 05.07.2016 JP 2016132954
(71) Applicant: Kawasaki Jukogyo Kabushiki Kaisha, Kobe-shi, Hyogo 650-8670 (JP)
(72) Inventor: SHINMURA, Nobuhiro, Hyogo 650-8670 (JP); IWASAKI, Hidekazu, Hyogo 650-8670 (JP); TAKATA, Hirotaka, Hyogo 650-8670 (JP); ANDOH, Akihiro, Hyogo 650-8670 (JP); TAKEDA, Hiroyuki, Hyogo 650-8670 (JP); INDOH, Naoko, Hyogo 650-8670 (JP)
(74) Representative: Dehns
(86) International application number: PCT/JP2017/024657
(87) International publication number: WO 2018/008684

(57) **Abstract**

A ship includes: a gas-consuming apparatus for propulsion; a tank storing LNG; a gas feed line that leads BOG generated in the tank to a compressor; a supply line that leads the BOG discharged from the compressor to the gas-consuming apparatus; a return line provided with an expansion device, the return line returning excess gas from the supply line to the tank; a regular-use heat exchanger for cooling the excess gas flowing through the return line at an upstream side of the expansion device; a non-regular-use heat exchanger for cooling the excess gas flowing through the return line between the regular-use heat exchanger and the expansion device; and a liquid feed line that leads the LNG discharged from a pump disposed in the tank to a forcing vaporizer. The non-regular-use heat exchanger performs heat exchange between the excess gas that has been cooled at the regular-use heat exchanger and the LNG flowing through the liquid feed line, and the non-regular-use heat exchanger performs the heat exchange via a phase change material. The phase change material is solidified when cooled by the LNG, and melts when heated by the excess gas whose temperature is higher than or equal to a predetermined temperature.

## Description

### Technical Field

The present invention relates to a ship including a gas-consuming apparatus for propulsion.

### Background Art

Conventionally, a reciprocating engine, a gas turbine engine, a gas-fired boiler, or the like is used as a gas-consuming apparatus for propulsion of a ship. For example, Patent Literature 1 discloses a ship 100 as shown in Fig. 12. The ship 100 includes an MEGI engine as a gas-consuming apparatus for propulsion. The MEGI engine uses, as a fuel, boil off gas that is generated in tanks 110 storing liquefied natural gas.

Specifically, in the ship 100, the boil off gas is led from the tanks 110 to a compressor 130 through a gas feed line 121, and is compressed to a high temperature and high pressure in the compressor 130. The boil off gas discharged from the compressor 130 is led to the MEGI engine through a supply line 122. A return line 140 branches off from the supply line 122, and the return line 140 is connected to the tanks 110. The return line 140 serves to return excess gas from the supply line 122 to the tanks 110. The excess gas is an unconsumed portion of the boil off gas, which has not been consumed by the MEGI engine.

The return line 140 is provided with an expansion valve 141 and a gas-liquid separator 142, which are arranged in this order from the upstream side. The high-temperature and high-pressure excess gas, which is returned to the tanks 110 through the return line 140, is cooled at two heat exchangers 161 and 162, and then expanded at the expansion valve 141 to be in a low-temperature and low-pressure gas-liquid two-phase state. The excess gas in the gas-liquid two-phase state is separated at the gas-liquid separator 142 into a gas component and a liquid component, and only the liquid component is returned to the tanks 110. Meanwhile, the gas component is led from the gas-liquid separator 142 to the gas feed line 121 through a recirculation line 150.

The heat exchanger 161, which is positioned at the upstream side on the return line 140, performs heat exchange between the excess gas flowing through the return line 140 and the boil off gas flowing through the gas feed line 121. The heat exchanger 162, which is positioned at the downstream side on the return line 140, performs heat exchange between the excess gas that has been cooled at the heat exchanger 161 and the gas component flowing through the recirculation line 150.

### Citation List

### Patent Literature

PTL 1: Japanese National Phase PCT Laid-Open Application Publication No. 2015-505941

### Summary of Invention

### Technical Problem

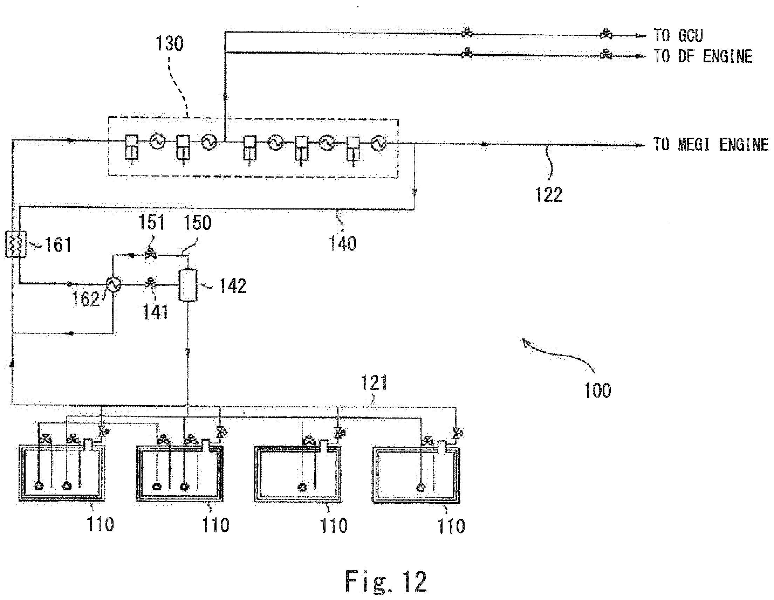

In the ship 100 shown in Fig. 12, the excess gas is cooled only by the coldness of the boil off gas flowing through the gas feed line 121 and the coldness of the gas component flowing through the recirculation line 150. For this reason, there is a possibility that depending on the amount of excess gas, the excess gas is not cooled sufficiently, which results in a low re-liquefaction rate of the excess gas (the re-liquefaction rate is the proportion of a re-liquefied amount of excess gas to the total amount of excess gas). For example, while a ship is navigating normally, the excess gas is not generated in a large amount. However, while the ship is anchoring, the excess gas is generated in a large amount.

In view of the above, an object of the present invention is to make it possible to sufficiently cool the excess gas even when the amount of excess gas is large.

### Solution to Problem

In order to solve the above-described problems, one aspect of the present invention provides a ship including: a gas-consuming apparatus for propulsion; a tank storing liquefied natural gas; a gas feed line that leads boil off gas generated in the tank to a compressor; a supply line that leads the boil off gas discharged from the compressor to the gas-consuming apparatus; a return line provided with an expansion device, the return line returning excess gas from the supply line to the tank; a regular-use heat exchanger for cooling the excess gas flowing through the return line at an upstream side of the expansion device; a non-regular-use heat exchanger for cooling the excess gas flowing through the return line between the regular-use heat exchanger and the expansion device; and a liquid feed line that leads the liquefied natural gas discharged from a pump disposed in the tank to a forcing vaporizer. The non-regular-use heat exchanger performs heat exchange between the excess gas that has been cooled at the regular-use heat exchanger and the liquefied natural gas flowing through the liquid feed line, and the non-regular-use heat exchanger performs the heat exchange via a phase change material. The phase change material is solidified when cooled by the liquefied natural gas, and melts when heated by the excess gas whose temperature is higher than or equal to a predetermined temperature.

According to the above-described configuration, the coldness of the liquefied natural gas can be stored as the latent heat of the phase change material as a result of the phase change material in the non-regular-use heat exchanger being solidified. When the amount of excess gas is small, the excess gas is sufficiently cooled at the regular-use heat exchanger, such that the temperature of the excess gas flowing into the non-regular-use heat exchanger is lower than or about equal to the predetermined temperature. For this reason, the non-regular-use heat exchanger does not function much. On the other hand, when the amount of excess gas is large, the cooling of the excess gas at the regular-use heat exchanger is insufficient, such that the temperature of the excess gas flowing into the non-regular-use heat exchanger is higher than the predetermined temperature. As a result, the phase change material in the non-regular-use heat exchanger melts. That is, when the amount of excess gas is large, the excess gas can be cooled by the coldness of the liquefied natural gas, which is stored in the phase change material. Thus, even when the amount of excess gas is large, the excess gas can be cooled sufficiently, and the re-liquefaction rate of the excess gas can be improved.

Another aspect of the present invention provides a ship including: a gas-consuming apparatus for propulsion; a tank storing liquefied natural gas; a gas feed line that leads boil off gas generated in the tank to a compressor; a supply line that leads the boil off gas discharged from the compressor to the gas-consuming apparatus; a return line provided with an expansion device, the return line returning excess gas from the supply line to the tank; a regular-use heat exchanger for cooling the excess gas flowing through the return line at an upstream side of the expansion device; and a non-regular-use heat exchanger for cooling the excess gas flowing through the return line between the regular-use heat exchanger and the expansion device. The non-regular-use heat exchanger performs heat exchange between the excess gas that has been cooled at the regular-use heat exchanger and the boil off gas flowing through the supply line, and the non-regular-use heat exchanger performs the heat exchange via a phase change material. The phase change material is solidified when cooled by the boil off gas, and melts when heated by the excess gas whose temperature is higher than or equal to a predetermined temperature.

According to the above-described configuration, the coldness of the boil-off gas can be stored as the latent heat of the phase change material as a result of the phase change material in the non-regular-use heat exchanger being solidified. When the amount of excess gas is small, the excess gas is sufficiently cooled at the regular-use heat exchanger, such that the temperature of the excess gas flowing into the non-regular-use heat exchanger is lower than or about equal to the predetermined temperature. For this reason, the non-regular-use heat exchanger does not function much. On the other hand, when the amount of excess gas is large, the cooling of the excess gas at the regular-use heat exchanger is insufficient, such that the temperature of the excess gas flowing into the non-regular-use heat exchanger is higher than the predetermined temperature. As a result, the phase change material in the non-regular-use heat exchanger melts. That is, when the amount of excess gas is large, the excess gas can be cooled by the coldness of the boil-off gas, which is stored in the phase change material. Thus, even when the amount of excess gas is large, the excess gas can be cooled sufficiently, and the re-liquefaction rate of the excess gas can be improved.

Yet another aspect of the present invention provides a ship including: a gas-consuming apparatus for propulsion; a tank storing liquefied natural gas; a gas feed line that leads boil off gas generated in the tank to a compressor; a first supply line that leads the boil off gas discharged from the compressor to the gas-consuming apparatus; a return line provided with an expansion device, the return line returning excess gas from the first supply line to the tank; a regular-use heat exchanger for cooling the excess gas flowing through the return line at an upstream side of the expansion device; a non-regular-use heat exchanger for cooling the excess gas flowing through the return line between the regular-use heat exchanger and the expansion device; a liquid feed line that leads the liquefied natural gas discharged from a pump disposed in the tank to a forcing vaporizer; and a second supply line provided with a cooler, the second supply line leading vaporization gas generated at the forcing vaporizer. The non-regular-use heat exchanger performs heat exchange between the excess gas that has been cooled at the regular-use heat exchanger and the vaporization gas that has been cooled at the cooler, and the non-regular-use heat exchanger performs the heat exchange via a phase change material. The phase change material is solidified when cooled by the vaporization gas that has been cooled at the cooler, and melts when heated by the excess gas whose temperature is higher than or equal to a predetermined temperature.

According to the above-described configuration, the coldness of the vaporization gas can be stored as the latent heat of the phase change material as a result of the phase change material in the non-regular-use heat exchanger being solidified. When the amount of excess gas is small, the excess gas is sufficiently cooled at the regular-use heat exchanger, such that the temperature of the excess gas flowing into the non-regular-use heat exchanger is lower than or about equal to the predetermined temperature. For this reason, the non-regular-use heat exchanger does not function much. On the other hand, when the amount of excess gas is large, the cooling of the excess gas at the regular-use heat exchanger is insufficient, such that the temperature of the excess gas flowing into the non-regular-use heat exchanger is higher than the predetermined temperature. As a result, the phase change material in the non-regular-use heat exchanger melts. That is, when the amount of excess gas is large, the excess gas can be cooled by the coldness of the vaporization gas, which is stored in the phase change material. Thus, even when the amount of excess gas is large, the excess gas can be cooled sufficiently, and the re-liquefaction rate of the excess gas can be improved.

### Advantageous Effects of Invention

The present invention makes it possible to sufficiently cool the excess gas even when the amount of excess gas is large.

### Brief Description of Drawings

Fig. 1 shows a schematic configuration of a ship according to Embodiment 1 of the present invention.
Fig. 2 shows a schematic configuration of a ship according to Embodiment 2 of the present invention.
Fig. 3 is a flowchart of control performed by a controller in Embodiment 2.
Fig. 4 shows a schematic configuration of a ship according to Embodiment 3 of the present invention.
Fig. 5 shows a schematic configuration of a ship according to Embodiment 4 of the present invention.
Fig. 6 shows a schematic configuration of a ship according to Embodiment 5 of the present invention.
Fig. 7 shows a schematic configuration of a ship according to Embodiment 6 of the present invention.
Fig. 8 is a flowchart of control performed by a controller in Embodiment 6.
Fig. 9 shows a schematic configuration of a ship according to Embodiment 7 of the present invention.
Fig. 10 shows a schematic configuration of a ship according to Embodiment 8 of the present invention.
Fig. 11 shows a schematic configuration of a ship according to another embodiment.
Fig. 12 shows a schematic configuration of a conventional ship.

### Description of Embodiments

### (Embodiment 1)

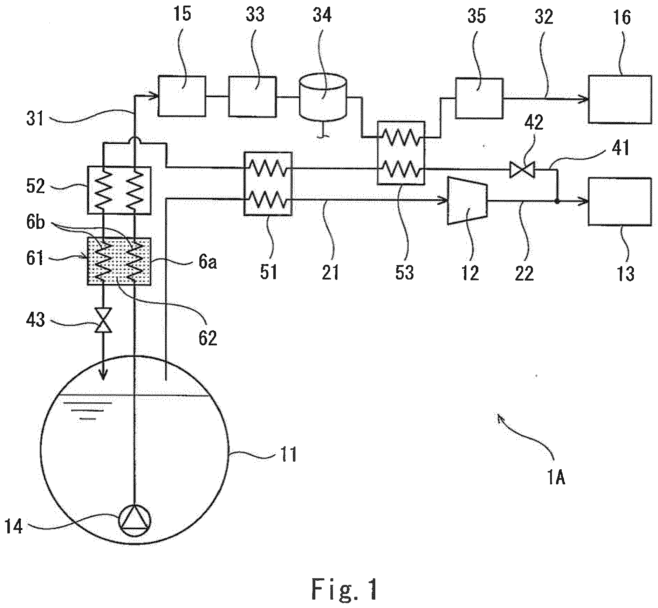

Fig. 1 shows a ship 1A according to Embodiment 1 of the present invention. The ship 1A includes: a tank 11 storing liquefied natural gas (hereinafter, "LNG"); a main gas engine 13, which is a gas-consuming apparatus for propulsion; and an auxiliary gas engine 16 for onboard power supply. Alternatively, the gas-consuming apparatus for propulsion may be, for example, a gas-fired boiler.

In the illustrated example, only one tank 11 is provided. However, as an alternative, a plurality of tanks 11 may be provided. Also, in the illustrated example, only one main gas engine 13 and only one auxiliary gas engine 16 are provided. However, as an alternative, a plurality of main gas engines 13 may be provided, and a plurality of auxiliary gas engines 16 may be provided.

The main gas engine 13 may directly drive a screw propeller (not shown) to rotate (i.e., mechanical propulsion), or may drive the screw propeller to rotate via a power generator and a motor (i.e., electric propulsion).

In the present embodiment, the main gas engine 13 is a reciprocating engine with intermediate or high fuel gas injection pressure. The main gas engine 13 may be a pure gas engine that combusts only a fuel gas, or may be a dual fuel engine that combusts one of or both a fuel gas and a fuel oil. Alternatively, the main gas engine 13 may be a gas turbine engine.

The auxiliary gas engine 16 is a reciprocating engine with low fuel gas injection pressure, and is coupled to a power generator (not shown). The auxiliary gas engine 16 may be a pure gas engine that combusts only a fuel gas, or may be a dual fuel engine that combusts one of or both a fuel gas and a fuel oil.

Boil off gas (hereinafter, "BOG") generated in the tank 11 due to natural heat transfer thereinto is supplied to the main gas engine 13 as a fuel gas. Vaporization gas (hereinafter, "VG") generated by forcibly vaporizing the LNG is supplied to the auxiliary gas engine 16 as a fuel gas.

Specifically, the tank 11 is connected to a compressor 12 by a gas feed line 21, and the compressor 12 is connected to the main gas engine 13 by a first supply line 22. A pump 14 is disposed in the tank 11, and the pump 14 is connected to a forcing vaporizer 15 by a liquid feed line 31. The forcing vaporizer 15 is connected to the auxiliary gas engine 16 by a second supply line 32.

The gas feed line 21 leads the BOG generated in the tank 11 to the compressor 12. The compressor 12 compresses the BOG to an intermediate or high pressure. The first supply line 22 leads the BOG discharged from the compressor 12 to the main gas engine 13. However, for example, in a case where the main gas engine 13 is an engine with low fuel gas injection pressure, the compressor 12 may be a low-pressure compressor.

A return line 41 branches off from the first supply line 22, and the return line 41 is connected to the tank 11. The return line 41 serves to return excess gas from the first supply line 22 to the tank 11. The excess gas is an unconsumed portion of the BOG, which has not been consumed by the main gas engine 13. The return line 41 is provided with an on-off valve 42 and an expansion device 43, which are arranged in this order from the upstream side. An unshown controller opens the on-off valve 42 when the excess gas is generated, and closes the on-off valve 42 when the excess gas is not generated. The expansion device 43 is, for example, an expansion valve, an expansion turbine, or an ejector.

The liquid feed line 31 leads the LNG discharged from the pump 14 to the forcing vaporizer 15. The forcing vaporizer 15 forcibly vaporizes the LNG to generate the VG. The second supply line 32 leads the VG generated at the forcing vaporizer 15 to the auxiliary gas engine 16. The pump 14 discharges the LNG such that the pressure of the VG generated at the forcing vaporizer 15 (i.e., the outlet pressure of the forcing vaporizer 15) is higher than the fuel gas injection pressure of the auxiliary gas engine 16.

The second supply line 32 is provided with a cooler 33, a gas-liquid separator 34, and a heater 35, which are arranged in this order from the upstream side. Most of the heavy components of the VG (e.g., ethane, propane, butane, etc.) are cooled at the cooler 33 to transform into liquid, which is removed at the gas-liquid separator 34 and returned to the tank 11. As a result, the VG with a high methane number is supplied to the auxiliary gas engine 16. The heater 35 heats the VG that has passed through the gas-liquid separator 34 to a temperature suited for the supply of the VG to the auxiliary gas engine 16.

The present embodiment further includes four heat exchangers for cooling the excess gas flowing through the return line 41 (a first heat exchanger 51, a second heat exchanger 52, a third heat exchanger 53, and a non-regular-use heat exchanger 61). Between the on-off valve 42 and the expansion device 43, the return line 41 passes through the third heat exchanger 53, the first heat exchanger 51, the second heat exchanger 52, and the non-regular-use heat exchanger 61 in this order. The gas feed line 21 passes through the first heat exchanger 51. The liquid feed line 31 passes through the non-regular-use heat exchanger 61 and the second heat exchanger 52 in this order. The second supply line 32 passes through the third heat exchanger 53 between the gas-liquid separator 34 and the heater 35.

The first to third heat exchangers 51 to 53 are, for example, plate-fin type heat exchangers, each of which is formed by stacking plates and corrugated fins alternately. In the illustrated example, the first to third heat exchangers 51 to 53 are separate heat exchangers. However, as an alternative, any two or all of the first to third heat exchangers 51 to 53 may be integrated together.

The third heat exchanger 53 performs heat exchange between the excess gas flowing through the return line 41 between the on-off valve 42 and the first heat exchanger 51 and the VG flowing through the second supply line 32 between the gas-liquid separator 34 and the heater 35 (i.e., the VG that has been cooled at the cooler 33).

The first heat exchanger 51 performs heat exchange between the excess gas flowing through the return line 41 between the third heat exchanger 53 and the second heat exchanger 52 (i.e., the excess gas that has been cooled at the third heat exchanger 53) and the BOG flowing through the gas feed line 21.

The second heat exchanger 52 performs heat exchange between the excess gas flowing through the return line 41 between the first heat exchanger 51 and the non-regular-use heat exchanger 61 (i.e., the excess gas that has been cooled at the first heat exchanger 51) and the LNG flowing through the liquid feed line 31 at the downstream side of the non-regular-use heat exchanger 61. In the present embodiment, the second heat exchanger 52 corresponds to a regular-use heat exchanger of the present invention.

The non-regular-use heat exchanger 61 performs heat exchange between the excess gas flowing through the return line 41 between the second heat exchanger 52 and the expansion device 43 (i.e., the excess gas that has been cooled at the second heat exchanger 52) and the LNG flowing through the liquid feed line 31 between the second heat exchanger 52 and the pump 14. The non-regular-use heat exchanger 61 performs the heat exchange via a phase change material 62.

Specifically, the non-regular-use heat exchanger 61 includes: the phase change material 62, which is packed in a container 6a; and a pair of pipes 6b penetrating the container 6a, the pipes 6b being spaced apart from each other in the container 6a. One of the pipes 6b forms a part of the return line 41, and the other pipe 6b forms a part of the liquid feed line 31. The pair of pipes 6b may be in a helical form in the container 6a. Alternatively, the pair of pipes 6b may meander in the container 6a, and the pair of pipes 6b may be provided with heat transfer plates or fins so as to obtain a sufficient area of contact with the phase change material 62.

The phase change material 62 in the non-regular-use heat exchanger 61 has a solidifying point that is higher to some extent than the temperature (about -160 °C) of the LNG in the tank 11. For example, the solidifying point of the phase change material 62 is -150°C to -120°C. Examples of the phase change material 62 include n-pentane, 1-propanol, allyl alcohol, and methylcyclohexane. Accordingly, the phase change material 62 is solidified when cooled by the LNG flowing into the non-regular-use heat exchanger 61. The phase change material 62 does not melt when the temperature of the excess gas flowing into the non-regular-use heat exchanger 61 is lower than the solidifying point of the phase change material 62. On the other hand, the phase change material 62 melts when the temperature of the excess gas flowing into the non-regular-use heat exchanger 61 is higher than the solidifying point of the phase change material 62. That is, the phase change material 62 melts when heated by the excess gas whose temperature is higher than or equal to a predetermined temperature TA, which is equal to the solidifying point of the phase change material 62.

In the above-described ship 1A of the present embodiment, the coldness of the LNG can be stored as the latent heat of the phase change material 62 as a result of the phase change material 62 in the non-regular-use heat exchanger 61 being solidified. When the amount of excess gas is small, the excess gas is sufficiently cooled at the second heat exchanger 52, such that the temperature of the excess gas flowing into the non-regular-use heat exchanger 61 is lower than or about equal to the predetermined temperature TA. For this reason, the non-regular-use heat exchanger 61 does not function much. On the other hand, when the amount of excess gas is large, the cooling of the excess gas at the second heat exchanger 52 is insufficient, such that the temperature of the excess gas flowing into the non-regular-use heat exchanger 61 is higher than the predetermined temperature TA. As a result, the phase change material 62 in the non-regular-use heat exchanger 61 melts. That is, when the amount of excess gas is large, the excess gas can be cooled by the coldness of the LNG, which is stored in the phase change material 62. Thus, even when the amount of excess gas is large, the excess gas can be cooled sufficiently, and the re-liquefaction rate of the excess gas can be improved.

Further, in the present embodiment, the second heat exchanger 52 and the non-regular-use heat exchanger 61 are arranged in series on the return line 41 and the liquid feed line 31. Therefore, surplus coldness of the LNG, which is surplus to the required coldness for the cooling of the excess gas at the second heat exchanger 52, can be stored in the non-regular-use heat exchanger 61. Particularly in a case where the second supply line 32 is a line that leads the VG to the auxiliary gas engine 16 intended for onboard power supply as in the present embodiment, the LNG always flows through the liquid feed line 31. Therefore, the coldness of the LNG, which is always flowing, can be stored usefully.

### <Variation>

One of or both the first heat exchanger 51 and the third heat exchanger 53 may be eliminated. The same is true for Embodiment 2 described below. However, if the first heat exchanger 51 is provided in addition to the second heat exchanger 52 (the regular-use heat exchanger) as in the above-described embodiment, the excess gas can be cooled by utilizing the BOG flowing through the gas feed line 21, and thereby the re-liquefaction rate of the excess gas can be further improved.

The second heat exchanger 52 may be eliminated, and only the first heat exchanger 51 or the third heat exchanger 53 may be present on the return line 41 at the upstream side of the non-regular-use heat exchanger 61. In this case, the first heat exchanger 51 or the third heat exchanger 53 corresponds to the regular-use heat exchanger of the present invention.

### (Embodiment 2)

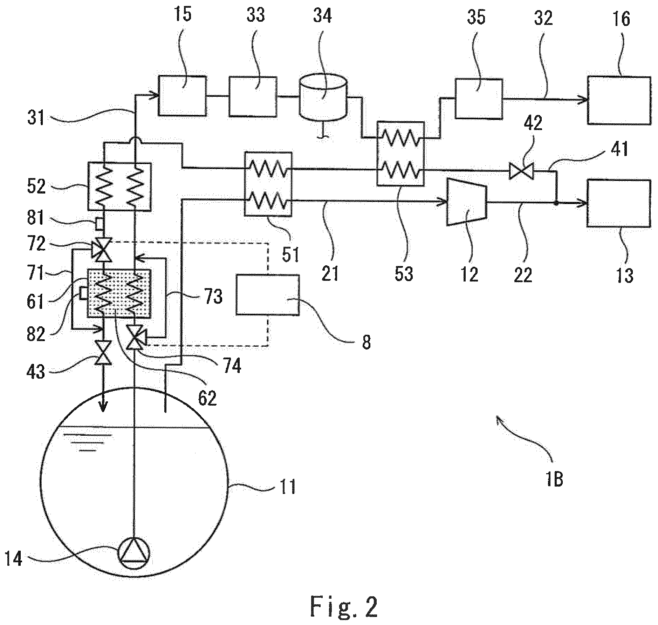

Fig. 2 shows a ship 1B according to Embodiment 2 of the present invention. It should be noted that, in each of the present embodiment and the following embodiments, the same components as those described in a preceding embodiment are denoted by the same reference signs as those used in the preceding embodiment, and the description of such components is omitted to avoid repeating the same descriptions.

The ship 1B of the present embodiment is different from the ship 1A of Embodiment 1 in the following point. In the ship 1B of the present embodiment, a first bypass line 71 is connected to the return line 41, and a second bypass line 73 is connected to the liquid feed line 31. In the present embodiment, unnecessary heat exchange between the excess gas and the LNG at the non-regular-use heat exchanger 61 can be avoided.

Specifically, the first bypass line 71 branches off from the return line 41 between the second heat exchanger 52 (the regular-use heat exchanger) and the non-regular-use heat exchanger 61, and merges with the return line 41 between the non-regular-use heat exchanger 61 and the expansion device 43. On the other hand, the second bypass line 73 branches off from the liquid feed line 31 between the pump 14 and the non-regular-use heat exchanger 61, and merges with the liquid feed line 31 between the non-regular-use heat exchanger 61 and the second heat exchanger 52.

The distribution ratio of the excess gas distributed to the non-regular-use heat exchanger 61 and the first bypass line 71 is adjusted by a first adjustment valve 72, and the distribution ratio of the LNG distributed to the non-regular-use heat exchanger 61 and the second bypass line 73 is adjusted by a second adjustment valve 74. In the present embodiment, the first adjustment valve 72 is a three-way valve disposed at a branch point on the return line 41, at which the first bypass line 71 branches off from the return line 41, and the second adjustment valve 74 is a distributing valve disposed at a branch point on the liquid feed line 31, at which the second bypass line 73 branches off from the liquid feed line 31. The three-way valve is a valve that selectively allows an upstream-side passage to communicate with one of two downstream-side passages. The distributing valve is a valve capable of changing the degree of communication of an upstream-side passage with two downstream-side passages as intended. However, as an alternative, the first adjustment valve 72 may be the same distributing valve as the second adjustment valve 74, or the second adjustment valve 74 may be the same three-way valve as the first adjustment valve 72. The first adjustment valve 72 may be configured as a pair of flow control valves that are provided on the first bypass line 71 and the return line 41, respectively. The second adjustment valve 74 may be configured as a pair of flow control valves that are provided on the second bypass line 73 and the liquid feed line 31, respectively.

The first adjustment valve 72 and the second adjustment valve 74 are controlled by a controller 8. The controller 8 includes, for example, a CPU and memories such as a ROM and a RAM. The controller 8 is connected to a first temperature sensor 81 and a second temperature sensor 82. It should be noted that Fig. 2 shows only part of signal lines for simplifying the drawing. The first temperature sensor 81 detects a temperature T1 of the excess gas that has been cooled at the second heat exchanger 52, and the second temperature sensor 82 detects a temperature T2 of the phase change material 62 in the non-regular-use heat exchanger 61. It should be noted that the temperature T2 is measured at a suitable measurement point in the non-regular-use heat exchanger 61. The measurement may be performed at only one measurement point or at a plurality of measurement points. In a case where the measurement is performed at a plurality of measurement points, the temperature measured at one of the measurement points may be used as a representative temperature, or the average temperature of the temperatures measured at the plurality of measurement points may be used as a representative temperature.

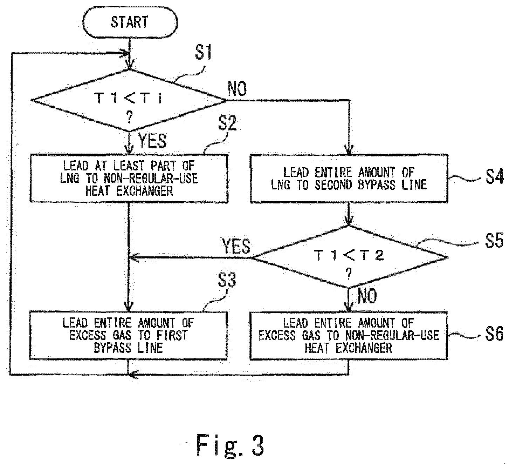

In a case where the excess gas is generated (i.e., the on-off valve 42 is open), the controller 8 performs control in accordance with a flowchart shown in Fig. 3. It should be noted that in a case where the excess gas is not generated (i.e., the on-off valve 42 is closed), the controller 8 controls the second adjustment valve 74 such that the entire amount of LNG discharged from the pump 14 is led to the non-regular-use heat exchanger 61.

First, the controller 8 compares the temperature T1 of the excess gas detected by the first temperature sensor 81 with a setting temperature Ti, which is higher than or equal to the aforementioned predetermined temperature TA (step S1). The setting temperature Ti is suitably set as a temperature suited for the introduction of the excess gas into the expansion device 43 (e.g., -130 °C). When the detected temperature T1 of the excess gas is lower than the setting temperature Ti (YES in step S1), the controller 8 controls the second adjustment valve 74 such that at least part of the LNG discharged from the pump 14 is led to the non-regular-use heat exchanger 61 (step S2), and controls the first adjustment valve 72 such that the entire amount of excess gas that has been cooled at the second heat exchanger 52 flows through the first bypass line 71 (step S3). In step S2, the second adjustment valve 74 is controlled such that the detected temperature T1 of the excess gas is kept lower than the setting temperature Ti, i.e., such that the temperature of the LNG flowing into the second heat exchanger 52 is not too high.

On the other hand, when the detected temperature T1 of the excess gas is higher than the setting temperature Ti (NO in step S1), the controller 8 controls the second adjustment valve 74 such that the entire amount of LNG discharged from the pump 14 flows through the second bypass line 73 (step S4). For the control of the first adjustment valve 72, the controller 8 further compares the detected temperature T1 of the excess gas with the temperature T2 of the phase change material 62 detected by the second temperature sensor 82 (step S5).

When the detected temperature T1 of the excess gas is lower than the detected temperature T2 of the phase change material 62 (YES in step S5), the controller 8 controls the first adjustment valve 72 such that the entire amount of excess gas that has been cooled at the second heat exchanger 52 flows through the first bypass line 71 (step S3). On the other hand, when the detected temperature T1 of the excess gas is higher than the detected temperature T2 of the phase change material 62 (NO in step S5), the controller 8 controls the first adjustment valve 72 such that the entire amount of excess gas that has been cooled at the second heat exchanger 52 is led to the non-regular-use heat exchanger 61 (step S6).

By comparing the temperature T1 of the excess gas that has been cooled at the second heat exchanger 52 with the setting temperature Ti as in the present embodiment, it can be determined whether or not the coldness of the LNG is more than enough for the cooling of the excess gas at the second heat exchanger 52. When the temperature T1 of the excess gas that has been cooled at the second heat exchanger 52 is lower than the setting temperature Ti, i.e., when the coldness of the LNG is more than enough for the cooling of the excess gas at the second heat exchanger 52, at least part of the LNG is led to the non-regular-use heat exchanger 61. In this manner, surplus coldness can be stored.

In the present embodiment, the excess gas that has been cooled at the second heat exchanger 52 is led to the non-regular-use heat exchanger 61 only when the temperature T1 of the excess gas that has been cooled at the second heat exchanger 52 is higher than the setting temperature Ti and higher than the temperature T2 of the phase change material 62. Thus, only when the excess gas has not been sufficiently cooled and further cooling of the excess gas can be performed, the excess gas can be cooled at the non-regular-use heat exchanger 61.

### (Embodiment 3)

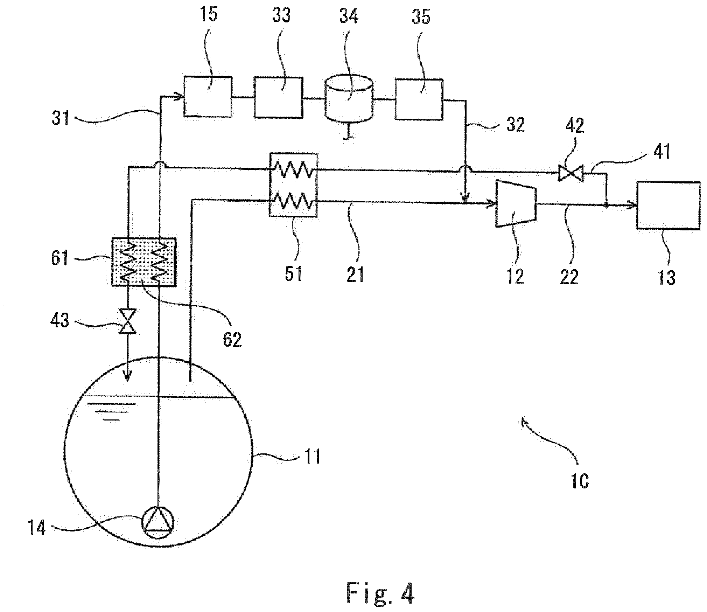

Fig. 4 shows a ship 1C according to Embodiment 3 of the present invention. The ship 1C of the present embodiment is different from the ship 1A of Embodiment 1 in the following two points. The first difference is that the ship 1C is not provided with the auxiliary gas engine 16, and the second supply line 32 leads the VG to the gas feed line 21 at the upstream side of the compressor 12.

The second difference of the ship 1C of the present embodiment from the ship 1A of Embodiment 1 is that the ship 1C is not provided with the second heat exchanger 52 and the third heat exchanger 53. That is, in the present embodiment, the first heat exchanger 51 corresponds to the regular-use heat exchanger of the present invention.

In the present embodiment, when the amount of excess gas is large and the cooling of the excess gas at the first heat exchanger 51 is insufficient, the excess gas can be cooled by the coldness of the LNG stored in the phase change material 62. Thus, even when the amount of excess gas is large, the excess gas can be cooled sufficiently, and the re-liquefaction rate of the excess gas can be improved.

### (Embodiment 4)

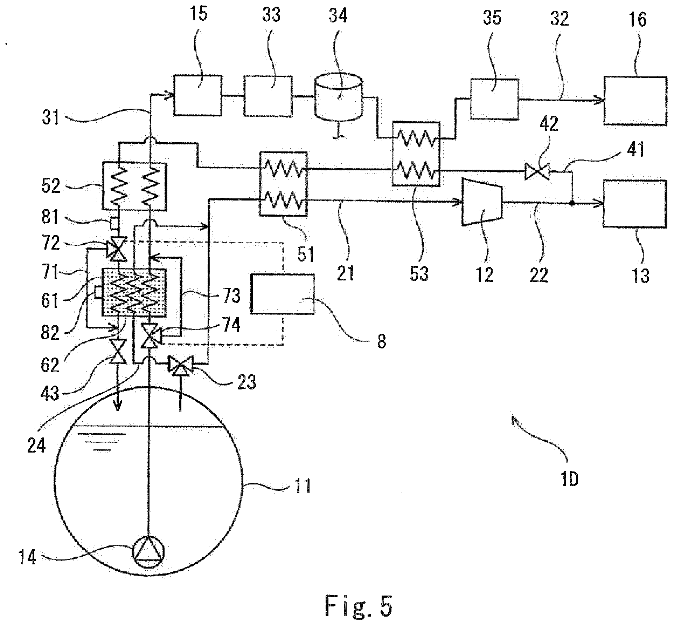

Fig. 5 shows a ship 1D according to Embodiment 4 of the present invention. The ship 1D of the present embodiment is different from the ship 1B of Embodiment 2 in the following point. In the ship 1D, a bypass line 24 is connected to the gas feed line 21 in a manner to bypass a part of the gas feed line 21. The bypass line 24 passes through the non-regular-use heat exchanger 61. Further, in the present embodiment, an adjustment valve 23 is provided on the gas feed line 21 at a branch point where the bypass line 24 branches off from the gas feed line 21. The adjustment valve 23 may be a three-way valve, or may be a distributing valve.

The above configuration of the present embodiment makes it possible to cool the phase change material 62 by utilizing the BOG when the temperature T2 of the phase change material 62 in the non-regular-use heat exchanger 61 is higher than the temperature of the BOG.

### (Embodiment 5)

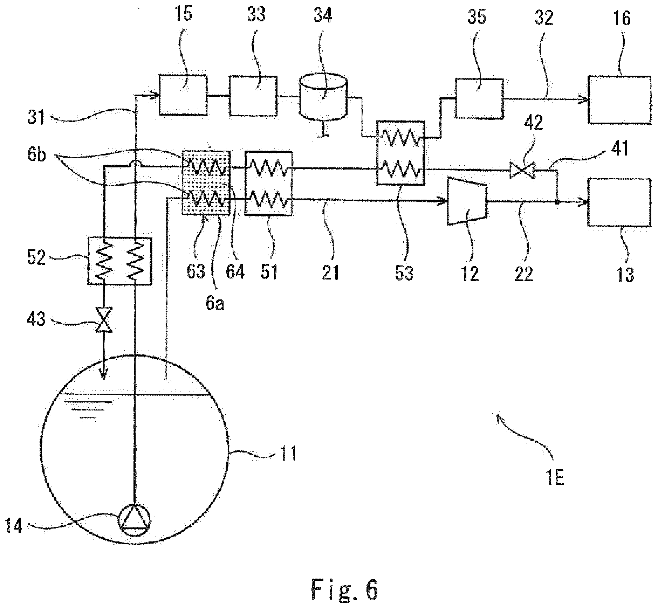

Fig. 6 shows a ship 1E according to Embodiment 5 of the present invention. The ship 1E of the present embodiment is different from the ship 1A of Embodiment 1 in the following point. The ship 1E adopts a non-regular-use heat exchanger 63, which is positioned on the return line 41 between the first heat exchanger 51 and the second heat exchanger 52, instead of adopting the non-regular-use heat exchanger 61, which is positioned on the return line 41 at the downstream side of the second heat exchanger 52. That is, in the present embodiment, the first heat exchanger 51 corresponds to the regular-use heat exchanger of the present invention.

The non-regular-use heat exchanger 63 performs heat exchange between the excess gas flowing through the return line 41 between the first heat exchanger 51 and the second heat exchanger 52 (i.e., the excess gas that has been cooled at the first heat exchanger 51) and the BOG flowing through the gas feed line 21 at the upstream side of the first heat exchanger 51, and the non-regular-use heat exchanger 63 performs the heat exchange via a phase change material 64.

Specifically, the non-regular-use heat exchanger 63 includes: the phase change material 64, which is packed in the container 6a; and the pair of pipes 6b penetrating the container 6a, the pipes 6b being spaced apart from each other in the container 6a. The pipes 6b are the same as the pipes 6b of the non-regular-use heat exchanger 61 described in Embodiment 1.

The phase change material 64 in the non-regular-use heat exchanger 63 has a solidifying point that is higher to some extent than the temperature (about -90°C) of the BOG generated in the tank 11. For example, the solidifying point of the phase change material 64 is -80°C to -50°C. Examples of the phase change material 64 include methyl ethyl ketone, 2-propanol, n-butanol, and acrylonitrile. Accordingly, the phase change material 64 is solidified when cooled by the BOG flowing into the non-regular-use heat exchanger 63. The phase change material 64 does not melt when the temperature of the excess gas flowing into the non-regular-use heat exchanger 63 is lower than the solidifying point of the phase change material 64. On the other hand, the phase change material 64 melts when the temperature of the excess gas flowing into the non-regular-use heat exchanger 63 is higher than the solidifying point of the phase change material 64. That is, the phase change material 64 melts when heated by the excess gas whose temperature is higher than or equal to a predetermined temperature TB, which is equal to the solidifying point of the phase change material 64.

In the above-described ship 1E of the present embodiment, the coldness of the BOG can be stored as the latent heat of the phase change material 64 as a result of the phase change material 64 in the non-regular-use heat exchanger 63 being solidified. When the amount of excess gas is small, the excess gas is sufficiently cooled at the first heat exchanger 51, such that the temperature of the excess gas flowing into the non-regular-use heat exchanger 63 is lower than or about equal to the predetermined temperature TB. For this reason, the non-regular-use heat exchanger 63 does not function much. On the other hand, when the amount of excess gas is large, the cooling of the excess gas at the first heat exchanger 51 is insufficient, such that the temperature of the excess gas flowing into the non-regular-use heat exchanger 63 is higher than the predetermined temperature TB. As a result, the phase change material 64 in the non-regular-use heat exchanger 63 melts. That is, when the amount of excess gas is large, the excess gas can be cooled by the coldness of the BOG, which is stored in the phase change material 64. Thus, even when the amount of excess gas is large, the excess gas can be cooled sufficiently, and the re-liquefaction rate of the excess gas can be improved.

Further, in the present embodiment, the first heat exchanger 51 and the non-regular-use heat exchanger 63 are arranged in series on the return line 41 and the gas feed line 21. Therefore, surplus coldness of the BOG, which is surplus to the required coldness for the cooling of the excess gas at the first heat exchanger 51, can be stored in the non-regular-use heat exchanger 63.

### <Variation>

One of or both the second heat exchanger 52 and the third heat exchanger 53 may be eliminated. The same is true for Embodiment 6 described below. However, if the second heat exchanger 52 is provided in addition to the first heat exchanger 51 (the regular-use heat exchanger) as in the above-described embodiment, the excess gas can be cooled by utilizing the LNG flowing through the liquid feed line 31, and thereby the re-liquefaction rate of the excess gas can be further improved.

The first heat exchanger 51 may be eliminated, and only the third heat exchanger 53 may be present on the return line 41 at the upstream side of the non-regular-use heat exchanger 63. In this case, the third heat exchanger 53 corresponds to the regular-use heat exchanger of the present invention.

### (Embodiment 6)

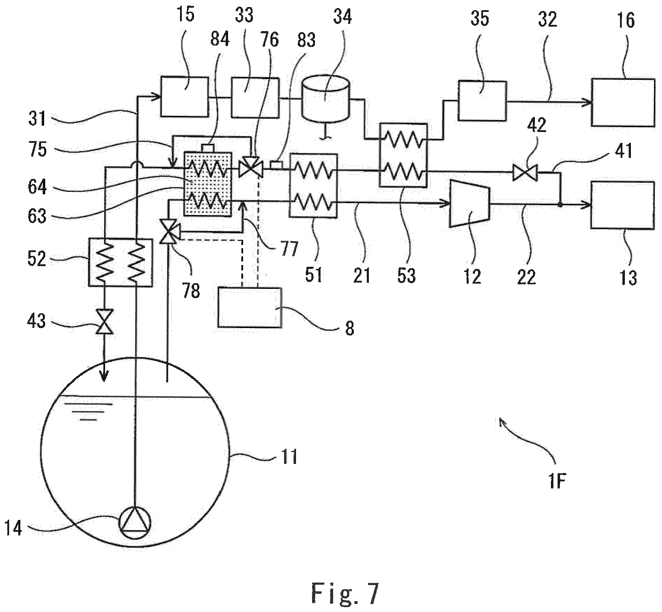

Fig. 7 shows a ship IF according to Embodiment 6 of the present invention. The ship IF of the present embodiment is different from the ship 1E of Embodiment 5 in the following point. In the ship 1F, a first bypass line 75 is connected to the return line 41, and a second bypass line 77 is connected to the gas feed line 21. In the present embodiment, unnecessary heat exchange between the excess gas and the BOG at the non-regular-use heat exchanger 63 can be avoided.

Specifically, the first bypass line 75 branches off from the return line 41 between the first heat exchanger 51 (the regular-use heat exchanger) and the non-regular-use heat exchanger 63, and merges with the return line 41 between the non-regular-use heat exchanger 63 and the second heat exchanger 52. On the other hand, the second bypass line 77 branches off from the gas feed line 21 at the upstream side of the non-regular-use heat exchanger 63, and merges with the gas feed line 21 between the non-regular-use heat exchanger 63 and the first heat exchanger 51.

The distribution ratio of the excess gas distributed to the non-regular-use heat exchanger 63 and the first bypass line 75 is adjusted by a first adjustment valve 76, and the distribution ratio of the BOG distributed to the non-regular-use heat exchanger 63 and the second bypass line 77 is adjusted by a second adjustment valve 78. In the present embodiment, the first adjustment valve 76 is a three-way valve disposed at a branch point on the return line 41, at which the first bypass line 75 branches off from the return line 41, and the second adjustment valve 78 is a distributing valve disposed at a branch point on the gas feed line 21, at which the second bypass line 77 branches off from the gas feed line 21. However, as an alternative, the first adjustment valve 76 may be the same distributing valve as the second adjustment valve 78, or the second adjustment valve 78 may be the same three-way valve as the first adjustment valve 76. The first adjustment valve 76 may be configured as a pair of flow control valves that are provided on the first bypass line 75 and the return line 41, respectively. The second adjustment valve 78 may be configured as a pair of flow control valves that are provided on the second bypass line 77 and the gas feed line 21, respectively.

The first adjustment valve 76 and the second adjustment valve 78 are controlled by the controller 8. The controller 8 is connected to a first temperature sensor 83 and a second temperature sensor 84. It should be noted that Fig. 7 shows only part of signal lines for simplifying the drawing. The first temperature sensor 83 detects a temperature T3 of the excess gas that has been cooled at the first heat exchanger 51, and the second temperature sensor 84 detects a temperature T4 of the phase change material 64 in the non-regular-use heat exchanger 63.

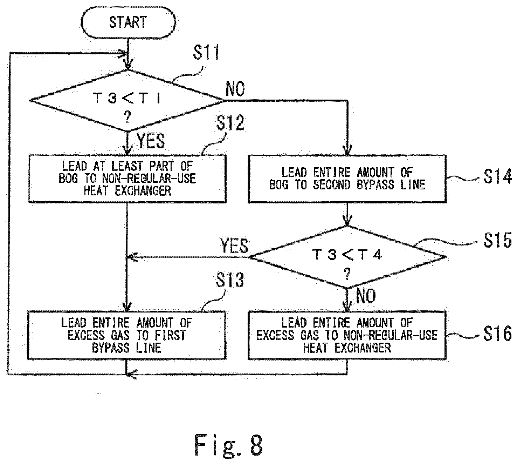

In a case where the excess gas is generated, the controller 8 performs control in accordance with a flowchart shown in Fig. 8. First, the controller 8 compares the temperature T3 of the excess gas detected by the first temperature sensor 83 with the setting temperature Ti, which is higher than or equal to the aforementioned predetermined temperature TB (step S11). The setting temperature Ti is suitably set as a temperature suited for the introduction of the excess gas into the expansion device 43 via the second heat exchanger 52 (i.e., the setting temperature Ti is set by taking account of further cooling of the excess gas at the second heat exchanger 52). When the detected temperature T3 of the excess gas is lower than the setting temperature Ti (YES in step S11), the controller 8 controls the second adjustment valve 78 such that at least part of the BOG taken out of the tank 11 is led to the non-regular-use heat exchanger 63 (step S12), and controls the first adjustment valve 76 such that the entire amount of excess gas that has been cooled at the first heat exchanger 51 flows through the first bypass line 75 (step S13). In step S12, the second adjustment valve 78 is controlled such that the detected temperature T3 of the excess gas is kept lower than the setting temperature Ti, i.e., such that the temperature of the BOG flowing into the first heat exchanger 51 is not too high.

On the other hand, when the detected temperature T3 of the excess gas is higher than the setting temperature Ti (NO in step S11), the controller 8 controls the second adjustment valve 78 such that the entire amount of BOG taken out of the tank 11 flows through the second bypass line 77 (step S14). For the control of the first adjustment valve 76, the controller 8 further compares the detected temperature T3 of the excess gas with the temperature T4 of the phase change material 64 detected by the second temperature sensor 84 (step S15).

When the detected temperature T3 of the excess gas is lower than the detected temperature T4 of the phase change material 62 (YES in step S15), the controller 8 controls the first adjustment valve 76 such that the entire amount of excess gas that has been cooled at the first heat exchanger 51 flows through the first bypass line 75 (step S13). On the other hand, when the detected temperature T3 of the excess gas is higher than the detected temperature T4 of the phase change material 64 (NO in step S15), the controller 8 controls the first adjustment valve 76 such that the entire amount of excess gas that has been cooled at the first heat exchanger 51 is led to the non-regular-use heat exchanger 63 (step S16).

By comparing the temperature T3 of the excess gas that has been cooled at the first heat exchanger 51 with the setting temperature Ti as in the present embodiment, it can be determined whether or not the coldness of the BOG is more than enough for the cooling of the excess gas at the first heat exchanger 51. When the temperature T3 of the excess gas that has been cooled at the first heat exchanger 51 is lower than the setting temperature Ti, i.e., when the coldness of the BOG is more than enough for the cooling of the excess gas at the first heat exchanger 51, at least part of the BOG is led to the non-regular-use heat exchanger 63. In this manner, surplus coldness can be stored.

In the present embodiment, the excess gas that has been cooled at the first heat exchanger 51 is led to the non-regular-use heat exchanger 63 only when the temperature T3 of the excess gas that has been cooled at the first heat exchanger 51 is higher than the setting temperature Ti and higher than the temperature T4 of the phase change material 64. Thus, only when the excess gas has not been sufficiently cooled and further cooling of the excess gas can be performed, the excess gas can be cooled at the non-regular-use heat exchanger 63.

### (Embodiment 7)

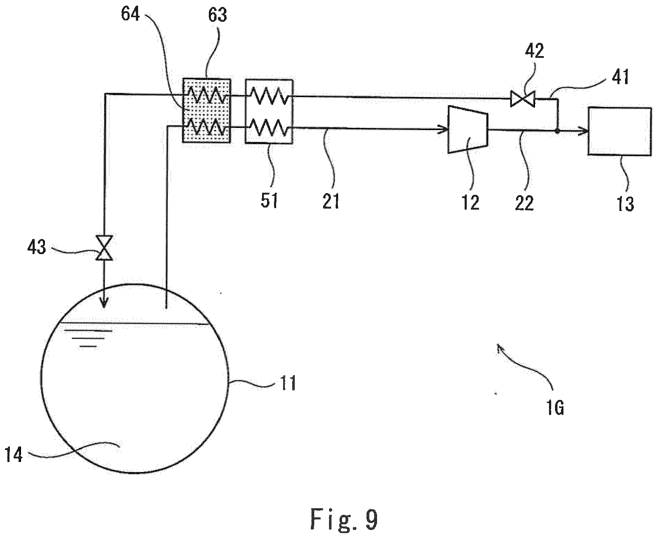

Fig. 9 shows a ship 1G according to Embodiment 7 of the present invention. The ship 1G of the present embodiment is different from the ship 1E of Embodiment 5 in the following point. In the ship 1G, all the components from the pump 14 to the auxiliary gas engine 16 are eliminated.

The present embodiment provides the same advantageous effects as those provided by Embodiment 5.

### (Embodiment 8)

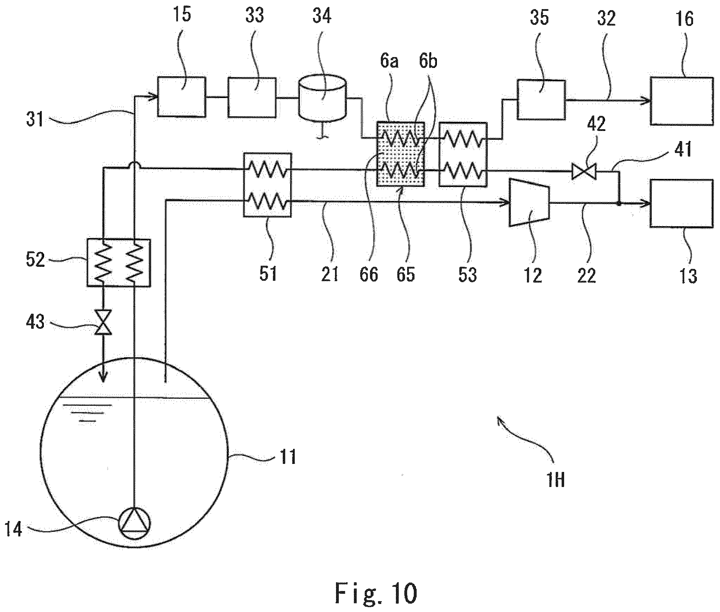

Fig. 10 shows a ship 1H according to Embodiment 8 of the present invention. The ship 1H of the present embodiment is different from the ship 1E of Embodiment 5 in the following point. The ship 1H adopts a non-regular-use heat exchanger 65, which is positioned on the return line 41 between the third heat exchanger 53 and the first heat exchanger 51, instead of adopting the non-regular-use heat exchanger 63, which is positioned on the return line 41 between the first heat exchanger 51 and the second heat exchanger 52. That is, in the present embodiment, the third heat exchanger 53 corresponds to the regular-use heat exchanger of the present invention.

The non-regular-use heat exchanger 65 performs heat exchange between the excess gas flowing through the return line 41 between the third heat exchanger 53 and the first heat exchanger 51 (i.e., the excess gas that has been cooled at the third heat exchanger 53) and the VG flowing through the second supply line 32 between the gas-liquid separator 34 and the third heat exchanger 53 (i.e., the VG that has been cooled at the cooler 33), and the non-regular-use heat exchanger 65 performs the heat exchange via a phase change material 66.

Specifically, the non-regular-use heat exchanger 65 includes: the phase change material 66, which is packed in the container 6a; and the pair of pipes 6b penetrating the container 6a, the pipes 6b being spaced apart from each other in the container 6a. The pipes 6b are the same as the pipes 6b of the non-regular-use heat exchanger 61 described in Embodiment 1.

The phase change material 66 in the non-regular-use heat exchanger 65 has a solidifying point that is higher to some extent than the temperature (about -140°C to -100°C) of the VG that has been cooled at the cooler 33. For example, the solidifying point of the phase change material 66 is -130°C to -60°C. Examples of the phase change material 64 include methanol, ethanol, 2-butanol, and 2,2-dimethylbutane. Accordingly, the phase change material 66 is solidified when cooled by the VG flowing into the non-regular-use heat exchanger 65 (i.e., the VG that has been cooled at the cooler 33). The phase change material 66 does not melt when the temperature of the excess gas flowing into the non-regular-use heat exchanger 65 is lower than the solidifying point of the phase change material 66. On the other hand, the phase change material 66 melts when the temperature of the excess gas flowing into the non-regular-use heat exchanger 65 is higher than the solidifying point of the phase change material 66. That is, the phase change material 66 melts when heated by the excess gas whose temperature is higher than or equal to a predetermined temperature TC, which is equal to the solidifying point of the phase change material 66.

In the above-described ship 1H of the present embodiment, the coldness of the VG can be stored as the latent heat of the phase change material 66 as a result of the phase change material 66 in the non-regular-use heat exchanger 65 being solidified. When the amount of excess gas is small, the excess gas is sufficiently cooled at the third heat exchanger 53, such that the temperature of the excess gas flowing into the non-regular-use heat exchanger 65 is lower than or about equal to the predetermined temperature TC. For this reason, the non-regular-use heat exchanger 65 does not function much. On the other hand, when the amount of excess gas is large, the cooling of the excess gas at the third heat exchanger 53 is insufficient, such that the temperature of the excess gas flowing into the non-regular-use heat exchanger 65 is higher than the predetermined temperature TC. As a result, the phase change material 66 in the non-regular-use heat exchanger 65 melts. That is, when the amount of excess gas is large, the excess gas can be cooled by the coldness of the VG, which is stored in the phase change material 66. Thus, even when the amount of excess gas is large, the excess gas can be cooled sufficiently, and the re-liquefaction rate of the excess gas can be improved.

Further, in the present embodiment, the third heat exchanger 53 and the non-regular-use heat exchanger 65 are arranged in series on the return line 41 and the second supply line 32. Therefore, surplus coldness of the VG, which is surplus to the required coldness for the cooling of the excess gas at the third heat exchanger 53, can be stored in the non-regular-use heat exchanger 65.

### <Variations>

One of or both the first heat exchanger 51 and the second heat exchanger 52 may be eliminated.

Instead of providing the third heat exchanger 53, the first heat exchanger 51 may be disposed on the return line 41 at the upstream side of the non-regular-use heat exchanger 65, and the non-regular-use heat exchanger 65 may further cool the excess gas that has been cooled at the first heat exchanger 51. In this case, the first heat exchanger 51 corresponds to the regular-use heat exchanger of the present invention.

Similar to Embodiments 2 and 6, a first bypass line that bypasses the non-regular-use heat exchanger 63 may be provided on the return line 41, and a second bypass line that bypasses the non-regular-use heat exchanger 63 may be provided on the second supply line 32.

### (Other Embodiments)

The present invention is not limited to Embodiments 1 to 9 described above. Various modifications can be made without departing from the spirit of the present invention.

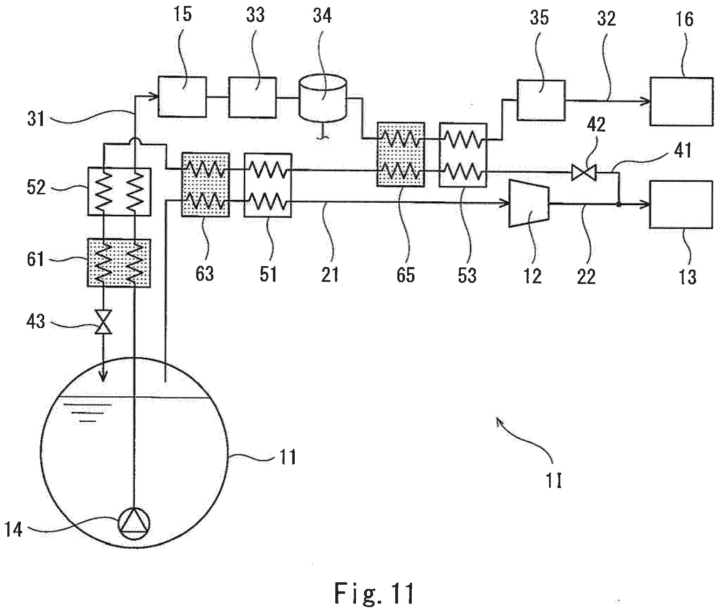

For example, as in a ship 1I shown in Fig. 11, all of the non-regular-use heat exchangers 61, 63, and 65 may be used together. Alternatively, although not illustrated, any two of the non-regular-use heat exchangers 61, 63, and 65 may be used together. The configuration shown in Fig. 11 may be combined with one or both of the following: the configuration shown in Fig. 2 (the first and second bypass lines 71 and 73, and the first and second adjustment valves 72 and 74); and the configuration shown in Fig. 7 (the first and second bypass lines 75 and 77, and the first and second adjustment valves 76 and 78).

### Reference Signs List

1A to 1I ship
11 tank
12 compressor
13 main gas engine (gas-consuming apparatus)
14 pump
15 forcing vaporizer
16 auxiliary gas engine
21 gas feed line
22 first supply line
31 liquid feed line
32 second supply line
35 cooler
41 return line
43 expansion device
51 first heat exchanger (regular-use heat exchanger in Embodiments 3 and 5 to 7)
52 second heat exchanger (regular-use heat exchanger in Embodiments 1, 2 and 4)
53 third heat exchanger (regular-use heat exchanger in Embodiment 8)
61, 63, 65 non-regular-use heat exchanger
62, 64, 66 phase change material
71, 75 first bypass line
72, 76 second bypass line
73, 77 first adjustment valve
74, 78 second adjustment valve
8 controller
81, 83 first temperature sensor
82, 84 second temperature sensor

## Claims

1. A ship comprising:
a gas-consuming apparatus for propulsion;
a tank storing liquefied natural gas;
a gas feed line that leads boil off gas generated in the tank to a compressor;
a supply line that leads the boil off gas discharged from the compressor to the gas-consuming apparatus;
a return line provided with an expansion device, the return line returning excess gas from the supply line to the tank;
a regular-use heat exchanger for cooling the excess gas flowing through the return line at an upstream side of the expansion device;
a non-regular-use heat exchanger for cooling the excess gas flowing through the return line between the regular-use heat exchanger and the expansion device; and
a liquid feed line that leads the liquefied natural gas discharged from a pump disposed in the tank to a forcing vaporizer, wherein
the non-regular-use heat exchanger performs heat exchange between the excess gas that has been cooled at the regular-use heat exchanger and the liquefied natural gas flowing through the liquid feed line, and the non-regular-use heat exchanger performs the heat exchange via a phase change material, and
the phase change material is solidified when cooled by the liquefied natural gas, and melts when heated by the excess gas whose temperature is higher than or equal to a predetermined temperature.

2. The ship according to claim 1, wherein
the gas-consuming apparatus is a main gas engine, and the supply line is a first supply line, and
the ship further comprises:
an auxiliary gas engine for onboard power supply; and
a second supply line that leads vaporization gas generated at the forcing vaporizer to the auxiliary gas engine.

3. The ship according to claim 1 or 2, wherein
the regular-use heat exchanger performs heat exchange between the excess gas flowing through the return line at an upstream side of the non-regular-use heat exchanger and the liquefied natural gas flowing through the liquid feed line at a downstream side of the non-regular-use heat exchanger.

4. The ship according to claim 3, further comprising a heat exchanger that performs heat exchange between the excess gas flowing through the return line at an upstream side of the regular-use heat exchanger and the boil off gas flowing through the gas feed line.

5. The ship according to claim 3 or 4, further comprising:
a first bypass line that branches off from the return line between the regular-use heat exchanger and the non-regular-use heat exchanger, and merges with the return line between the non-regular-use heat exchanger and the expansion device;
a first adjustment valve that adjusts a distribution ratio of the excess gas distributed to the non-regular-use heat exchanger and the first bypass line;
a second bypass line that branches off from the liquid feed line between the pump and the non-regular-use heat exchanger, and merges with the liquid feed line between the non-regular-use heat exchanger and the regular-use heat exchanger; and
a second adjustment valve that adjusts a distribution ratio of the liquefied natural gas distributed to the non-regular-use heat exchanger and the second bypass line.

6. The ship according to claim 5, further comprising:
a temperature sensor that detects a temperature of the excess gas that has been cooled at the regular-use heat exchanger; and
a controller that controls the first adjustment valve and the second adjustment valve, wherein
the controller controls the second adjustment valve such that:
when the temperature detected by the temperature sensor is higher than a setting temperature that is higher than or equal to the predetermined temperature, an entire amount of the liquefied natural gas discharged from the pump flows through the second bypass line; and
when the temperature detected by the temperature sensor is lower than the setting temperature, at least part of the liquefied natural gas discharged from the pump is led to the non-regular-use heat exchanger.

7. The ship according to claim 6, wherein
the temperature sensor is a first temperature sensor,
the ship further comprises a second temperature sensor that detects a temperature of the phase change material in the non-regular-use heat exchanger, and
the controller controls the first adjustment valve such that:
when the temperature detected by the first temperature sensor is lower than the setting temperature, an entire amount of the excess gas that has been cooled at the regular-use heat exchanger flows through the first bypass line;
when the temperature detected by the first temperature sensor is higher than the setting temperature but lower than the temperature detected by the second temperature sensor, the entire amount of the excess gas that has been cooled at the regular-use heat exchanger flows through the first bypass line; and
when the temperature detected by the first temperature sensor is higher than the setting temperature and higher than the temperature detected by the second temperature sensor, the entire amount of the excess gas that has been cooled at the regular-use heat exchanger is led to the non-regular-use heat exchanger.

8. A ship comprising:
a gas-consuming apparatus for propulsion;
a tank storing liquefied natural gas;
a gas feed line that leads boil off gas generated in the tank to a compressor;
a supply line that leads the boil off gas discharged from the compressor to the gas-consuming apparatus;
a return line provided with an expansion device, the return line returning excess gas from the supply line to the tank;
a regular-use heat exchanger for cooling the excess gas flowing through the return line at an upstream side of the expansion device; and
a non-regular-use heat exchanger for cooling the excess gas flowing through the return line between the regular-use heat exchanger and the expansion device, wherein
the non-regular-use heat exchanger performs heat exchange between the excess gas that has been cooled at the regular-use heat exchanger and the boil off gas flowing through the supply line, and the non-regular-use heat exchanger performs the heat exchange via a phase change material, and
the phase change material is solidified when cooled by the boil off gas, and melts when heated by the excess gas whose temperature is higher than or equal to a predetermined temperature.

9. The ship according to claim 8, wherein
the regular-use heat exchanger performs heat exchange between the excess gas flowing through the return line at an upstream side of the non-regular-use heat exchanger and the boil off gas flowing through the gas feed line at a downstream side of the non-regular-use heat exchanger.

10. The ship according to claim 9, further comprising:
a liquid feed line that leads the liquefied natural gas discharged from a pump disposed in the tank to a forcing vaporizer; and
a heat exchanger that performs heat exchange between the excess gas flowing through the return line between the non-regular-use heat exchanger and the expansion device and the liquefied natural gas flowing through the liquid feed line.

11. The ship according to claim 9 or 10, further comprising:
a first bypass line that branches off from the return line between the regular-use heat exchanger and the non-regular-use heat exchanger, and merges with the return line between the non-regular-use heat exchanger and the expansion device;
a first adjustment valve that adjusts a distribution ratio of the excess gas distributed to the non-regular-use heat exchanger and the first bypass line;
a second bypass line that branches off from the gas feed line at an upstream side of the non-regular-use heat exchanger, and merges with the gas feed line between the non-regular-use heat exchanger and the regular-use heat exchanger; and
a second adjustment valve that adjusts a distribution ratio of the boil off gas distributed to the non-regular-use heat exchanger and the second bypass line.

12. A ship comprising:
a gas-consuming apparatus for propulsion;
a tank storing liquefied natural gas;
a gas feed line that leads boil off gas generated in the tank to a compressor;
a first supply line that leads the boil off gas discharged from the compressor to the gas-consuming apparatus;
a return line provided with an expansion device, the return line returning excess gas from the first supply line to the tank;
a regular-use heat exchanger for cooling the excess gas flowing through the return line at an upstream side of the expansion device;
a non-regular-use heat exchanger for cooling the excess gas flowing through the return line between the regular-use heat exchanger and the expansion device;
a liquid feed line that leads the liquefied natural gas discharged from a pump disposed in the tank to a forcing vaporizer; and
a second supply line provided with a cooler, the second supply line leading vaporization gas generated at the forcing vaporizer, wherein
the non-regular-use heat exchanger performs heat exchange between the excess gas that has been cooled at the regular-use heat exchanger and the vaporization gas that has been cooled at the cooler, and the non-regular-use heat exchanger performs the heat exchange via a phase change material, and
the phase change material is solidified when cooled by the vaporization gas that has been cooled at the cooler, and melts when heated by the excess gas whose temperature is higher than or equal to a predetermined temperature.
